# EUROPEAN PATENT SPECIFICATION

(11) **EP 2 231 882 B1**
(45) Date of publication and mention of the grant of the patent: **17.04.2013**
(21) Application number: 07860754.6
(22) Date of filing: 28.12.2007
(51) Int. Cl.: C21B 13/00, C21B 13/06

(54) **APPARATUS AND METHOD FOR RECOVERING EXCESS GAS GENERATED IN IRONMAKING PROCESS**
APPARAT UND METHODE ZUR RÜCKGEWINNUNG VON ÜBERSCHÜSSIGEM, IN EINEM VERFAHREN ZUR HERSTELLUNG VON EISEN ERZEUGTEM GAS
APPAREIL ET PROCÉDÉ DE RÉCUPÉRATION D'UN EXCÉDENT DE GAZ GÉNÉRÉ LORS D'UN PROCESSUS DE FABRICATION DE FER

(43) Date of publication of application: 29.09.2010
(73) Proprietor: Posco, Pohang Kyungsangbook-do 790-300 (KR)
(72) Inventor: CHO, Myung Jong, Pohang Kyungsangbook-do 790-300 (KR); PARK, Hae Doo, Pohang Kyungsangbook-do 790-300 (KR); KIM, Wan Gi, Pohang Kyungsangbook-do 790-300 (KR); LEE, Hoo Geun, Pohang Kyungsgangbook-do 790-300 (KR); SHIN, Myoung Kyun, Pohang Kyungsangbook-do 790-300 (KR)
(74) Representative: Zech, Stefan Markus
(86) International application number: PCT/KR2007/006976
(87) International publication number: WO 2009/084750

(56) References cited:
- KR-A- 20030 013 057
- KR-B1- 100 815 702
- US-A- 4 375 983
- US-A- 4 978 387
- US-A1- 2006 119 022
- US-B1- 6 214 084

## Description

### Technical Field

The present disclosure relates to an apparatus and method for stably recovering an excess gas generated in an ironmaking process, and more particularly, to an apparatus and method for recovering excess gas generated in an ironmaking process which can control a pressure of a melter-gasifier to increase a recovery rate of the excess gas discharged in an ironmaking process using non-coking coals and fine iron ores, as well as recover the excess gas at a low pressure to construct a low-pressure small-capacity equipment and simply control an operation of the excess gas recovery apparatus.

### Background Art

A blast-furnace process typically known for an ironmaking process requires raw material preliminary treatment equipment such as a coke-making equipment. Thus, to construct such an auxiliary equipment, a significant expense is expected.

In addition, to construct environmental pollution prevention facilities for treating environmental pollution materials generated during an operation of the coke-making equipment, the blast-furnace process requires significant expense.

Accordingly, the ironmaking process using non-coking coals and fine iron ores is previously known. That is, the ironmaking process directly uses the non-coking coals as fuel and reductant, and directly uses the fine iron ores occupying account for more than about 80% of the world's ore production as an iron source material to manufacture molten irons.

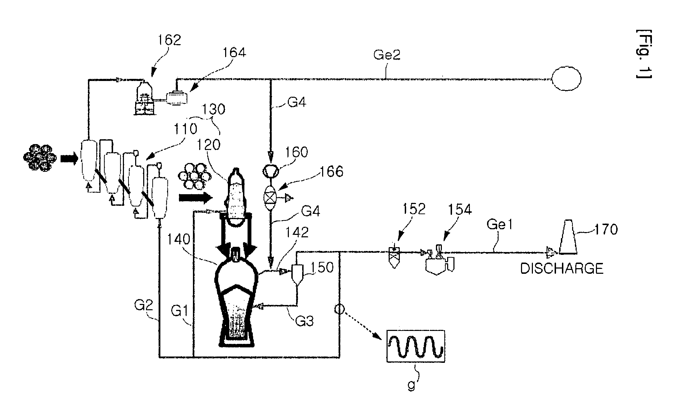

FIG. 1 a view illustrating a typical process, e.g., a FINEX process in which molten irons are manufactured by directly using non-coking coals and fine iron ores.

Referring to FIG. 1, principal equipments of the typical FINEX process include a fluidized-bed reduction furnace 130 including multi-stage fluidized bed furnaces 110 and a reduction furnace 120, and a melter-gasifier 140 in which a coal packed bed is formed.

Ores successively charged into a top reactor at room temperature are in contact with a high temperature reduction gas supplied from the melter-gasifier 140 while the ores pass through the fluidized bed furnaces 110 and the reduction furnace 120 in order. As a result, the ores are converted into high temperature reduced fine iron ores having a rising temperature and reduction of 90% or more, and at the same time, the reduced fine iron ores are successively charged into the melter-gasifier 140 in which the coal packed bed is formed to melt in the coal packed bed, thereby being converted into molten pig irons. Thereafter, the molten pig irons are discharged from the melter-gasifier 140.

That is, lump coals are successively supplied into the melter-gasifier 140 through an upper portion of the melter-gasifier 140 to form the coal packed bed having a predetermined height within the melter-gasifier 140. When oxygen is injected into the coal packed bed through a tuyere, coals within the coal packed bed are burned to generate a combustion gas. When the generated combustion gas rises while the gas passes through the coal packed bed, the combustion gas is converted into reduction stream having a high temperature. Thereafter, the combustion gas converted into the reduction stream is discharged from the melter-gasifier 140 so that the gas is supplied to the reduction furnace 120 and the melter-gasifier 140.

Referring to FIG. 1, a reduction gas discharged through a gas discharge line 142 connected to the melter-gasifier 140 pass through a cyclone 150 and is supplied to the reduction furnace 120 and the fluidized bed furnaces 110 through reduction furnace-side and fluidized bed furnace-side gas circulation lines (or referred to as "gas conduits") G1 and G2 (hereinafter, referred to as "a circulation line G1 and a circulation line G2", respectively).

The high temperature reduction gas supplied from the melter-gasifier 140 to the fluidized bed furnaces 110 and the reduction furnace 120 is generated by combustion and gasification of the non-coking coals. A production amount of the reduction gas is sharply fluctuated according to ingredient and operation conditions of the coals.

For example, the range of fluctuation of the production amount of the high temperature reduction gas reaches from about 20% to about 50% in an extreme case. Also, the extreme fluctuation occurs in a short period of time.

As illustrated in a simplified graph g of FIG. 1, a pressure pick value according to fluctuation of a gas flow amount is not consistently maintained, and an amount of the high temperature reduction gas supplied to the gas circulation line G2, the gas circulation line G1, and a melter-gasifier-side gas circulation line G3 (hereinafter, referred to as "a gas circulation line G3") sharply increases in short period of time and sharply decreases again.

As a result, the sharp fluctuation of the pressure pick value according to the sharp increase or decrease of the amount of the reduction gas sharply changes a flow speed of the high temperature reduction gas generated within the fluidized bed furnaces 110 and the reduction furnace 120. As a result, ore fluidized beds temporarily collapses.

In order to stably maintain the ore fluidized beds in the fluidized bed furnaces 110 and the reduction furnace 120, environments of the reduction gas discharged from the melter-gasifier 140 need to be stably constructed.

The sharp fluctuation of the reduction gas causes an unstable pressure in the melter-gasifier 140, resulting in an unstable operation of the melter-gasifier 140.

That is, the pressure and flow amount of the reduction gas have an influence on the stable maintenance of the ore fluidized beds and the stable operation of the melter-gasifier 140.

Referring to FIG. 1, a portion of the excess gas discharged from the melter-gasifier 140 is discharged into a melter-gasifier-side excess gas line Ge1 (hereinafter, referred to as "an excess gas line Ge1") through a pressure control valve 154 such that the pressure within the melter-gasifier 140 is regularly maintained even if the pressure and the flow amount of the reduction gas are sharply fluctuated.

In this case, the sharp fluctuation of the reduction gas circulating in the reduction furnace 120 and the fluidized bed furnaces 110 is controlled to withdraw a uniform amount.

That is, an excess amount increased according to the fluctuation of the pressure and flow amount is guided and discharged into the excess gas line Ge1 and the reduction gas is circulated and supplied into the fluidized bed furnaces 110 and the reduction furnace 120 at a uniform pressure and flow amount.

Since the increased amount according to the fluctuation of the pressure and flow amount reaches from about 20% to about 50%, and thus, a large amount of the reduction gas is discharged through the excess gas line Ge1, the reduction gas for reducing, the (fine iron) ores is insufficient during an actual operation.

Accordingly, as illustrated in FIG. 1, a portion of the excess gas discharged from the fluidized bed furnaces 110 passes through a gas circulation line G4 branched from a fluidized bed furnace-side excess gas line Ge2 (hereinafter, referred to as "an excess gas line Ge2") to move into a compressor 160. The portion of the excess gas moving into the compressor 160 is compressed and moves into a CO₂ remover 166. A CO gas unnecessary for the reduction is removed through the CO₂ remover 166, and the remaining gas is supplied to the gas discharge line 142 of the melter-gasifier 140.

Therefore, the gas additionally supplied through the gas discharge line 142 and the cyclone 150 is supplied to the reduction furnace 120 and the fluidized bed furnaces 110 through the gas circulation lines G2 and G 1 to compensate the lack of the reduction gas as described above.

However, as illustrated in FIG. 1, in spite of the additionally compensating the reduction gas into the fluidized bed furnaces 110 and the reduction furnace 120, the reduction gas circulated and supplied into the fluidized bed furnaces 110 and the reduction furnace 120 is still insufficient.

In order to increase the amount of the reduction gas required for the reduction furnace 120 and the fluidized bed furnaces 110, only a pressure setting value of the pressure control valve 154 increases, or only an inlet flow amount control valve (not shown) of the reduction furnace 120 is controlled. In this case, since the flow amount or the pressure of the reduction gas may be unstable, there is a limitation that overall flow amount or pressure of the melter-gasifier 140, the reduction furnace 120, and fluidized bed furnaces 110 is maintained up to a required level.

Unexplained reference numerals 152 and 162 in FIG 1 (it can be also applied to FIGS. 2 and 3) denote cooling equipments for reducing a temperature of the excess gas in the excess gas lines Ge1 and Ge2, respectively, and unexplained reference numeral 164 denotes a flow amount control valve.

A technique that can overcome a typical limitation of a reduction gas circulation system in the ironmaking process, i.e., stably maintain the fluidized beds in each of furnaces to prevent the fluidized beds from being collapsed is disclosed in Korean Patent Laid-open Publication No. 2001-0045380, filed and published by the present applicant.

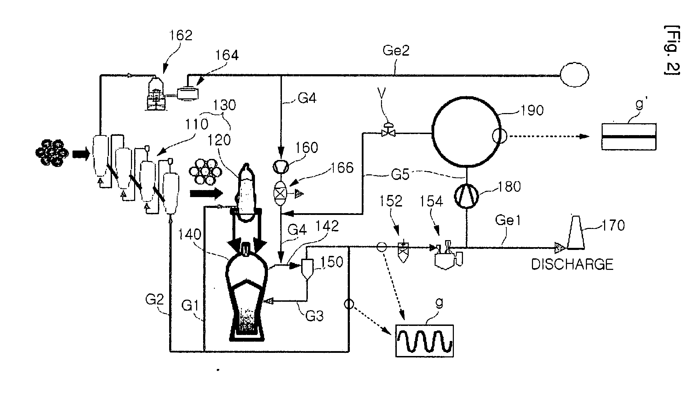

FIG. 2 is a view illustrating a conventional different reduction gas circulation system for preventing the fluidized beds described above from being collapsed.

Referring to FIG. 2, in the conventional different reduction gas circulation system, a portion of an excess gas discharged from a melter-gasifier 140 in an excess gas line Ge1 is stored in a buffer tank 190. The stored portion of the excess gas is circulated and supplied into a gas discharge line 142 when fluidized beds of fluidized bed furnaces 110 and a reduction furnace 120 are unstable or a pressure within the melter-gasifier 140 is unstable.

A compressor 180 and the buffer tank 190 are sequentially connected to another gas circulation line G5 connected to the excess gas line Ge1 connected to a stack 170, and a gas circulation line G5 is associated with a gas circulation line G4 branched from an excess gas line Ge2 and connected to the gas discharge line 142.

As illustrated in a simplified graph g of FIG. 2, a pressure pick value according to fluctuation of a gas flow amount in the reduction gas of the excess gas line Ge1 discharged from the melter-gasifier 140 is unstable according to an operation of the melter-gasifier 140. However, as illustrated in a simplified graph g of FIG. 2, the reduction gas stored in the buffer tank 190 through the compressor 180 has a uniform pressure pick value because the gas is pressured at a predetermined pressure.

The reduction gas stored in the buffer tank is supplied to the gas discharge line 142 through the gas circulation lines G5 and G4.

The reduction gas circulating at the uniform pressure is supplied to the reduction furnace, 120, the fluidized bed furnaces 110, and the melter-gasifier 140 through the gas circulation lines G1, G2, and G3, respectively. Thus, the collapse of the fluidized beds as described above is prevented, and the pressure within the melter-gasifer 140 is uniformly maintained.

However, the conventional reduction gas circulation system has the following limitations. For example, as illustrated in FIG. 2, since the reduction gas passes through the excess gas line Ge1 and move into the compressor 180, and then, the reduction gas is compressed through the compressor 180, and the compressed reduction gas is stored in the buffer tank 190, the amount of the circulation excess gas must be uniformly maintained for a normal operation of the compressor 180 during actual operation. However, since an actual discharge amount of the excess gas is not uniform, and in any case, the excess gas is not nearly generated, a rate of operation of the compressor 180 is very insufficiency. In addition, a recovery rate of the excess gas into the buffer tank 190 is only 10% in an actual operation line.

Since the excess gas (reduction gas) is compressed through the compressor, and the compressed gas is stored in the buffer tank, the buffer tank becomes a high-pressure state. As a result, a high-voltage large-capacity buffer tank is required to sharply increase equipment investment.

In addition, since the excess gas discharged from the gas circulation line G5 behind the buffer tank becomes also the high-pressure state, it is difficult to control the pressure using a control valve V disposed in the gas circulation line.

US 2006/0119022 A1 discloses an apparatus for manufacturing molten irons comprising a plurality of fluidized-bed reactors, a melter-gasifier and an exhaust gas branch line for branching exhaust gas from the fluidized-bed reactors to a conveying line for drying and conveying iron ores and additives. The known apparatus further includes a storage bin for storing the dried iron ores and additives.

### Disclosure of Invention

### Technical Problem

An aspect of the present invention provides an apparatus and method for recovering an excess gas generated in an ironmaking process using non-coking coals and fine iron ores, in which production costs of the ironmaking process can be reduced, a pressure of a melter-gasifier can be stably controlled, and fluidized beds of fluidized bed furnaces and a reduction furnace can be stably maintained because a recovery rate of the excess gas discharged in the ironmaking process using the non-coking coals and fine iron ores can increase to reduce generation of an unnecessary gas. This is set forth in claim 1.

### Technical Solution

According to an aspect of the present invention, there is provided an apparatus for recovering an excess gas in an ironmaking process which makes a molten iron with a fluidized bed furnace, a reduction furnace, and a melter-gasifier, the apparatus including: an excess gas recovery line associated with at least one of a melter-gasifier-side excess gas line and a fluidized bed furnace-side excess gas line, the excess gas recovery line recovering/supplying the excess gas from/to at least one of the melter-gasifier, the fluidized bed furnace, and the reduction furnace; one or more gas storage unit disposed in the excess gas recovery line, the gas storage unit receiving and storing the excess gas; and a compressor disposed in the excess gas recovery line of a downstream side of the gas storage unit, the compressor compressing the excess gas discharged from the gas storage unit.

The excess gas recovery apparatus may further include at least one of a heater unit and a filter unit for removing; moisture or foreign substances in the excess gas recovery line of an upstream side of the compressor.

The excess gas recovery apparatus may further include a high-pressure gas reverse supply line disposed between a downstream side of the compressor of the excess gas recovery line and the gas storage unit.

The excess gas recovery line is branched from the fluidized bed furnce-side excess gas line and connected to a gas circulation line connected to a gas discharge line of the melter-gasifier.

The gas discharge line of the melter-gasifier associated with the excess gas recovery line is associated with each of fluidized bed furnace-side, reduction furnace-side, and melter-gasifier-side gas circulation lines to supply the recovered excess gas to each of furnaces, thereby preventing collapse of fluidized beds and pressure irregularity within each of the furnaces.

The gas storage unit may include a buffer tank, and a seal pot for treating condensed water contained in the gas may be connected to a lower portion of the buffer tank.

According to another aspect of the present invention, there is provided a method for recovering an excess gas in an ironmaking process which makes a molten iron with a fluidized bed furnace, a reduction furnace, and a melter-gasifier, the method including:
storing a recovered excess gas discharged from at least one of the fluidized bed furnace and the melter-gasifier in a buffer tank as it is; and converting the excess gas discharged from the buffer tank into a high-pressure gas to circulate and supply the high-pressure gas into at least one of the melter-gasifier, the fluidized bed furnace, and the reduction furnace.

The excess gas discharged from the buffer tank may pass through a compressor to convert the excess gas into the high-pressure gas.

The excess gas discharged from the buffer tank may be supplied to the compressor after removing moisture or foreign substances contained in the excess gas.

The details of one or more embodiments are set forth in the accompanying drawings and the description below. Other features will be apparent from the description and drawings, and from the claims.

### Advantageous Effects

An apparatus and method for recovering an excess gas generated in an ironmaking process according to the present invention provides the following various effects.

A recovery rate of an excess gas used and discharged for controlling a pressure of a melter-gasifier in the ironmaking process can increase up to almost 100%, thereby reducing production costs.

Since the excess gas is recovered in a low-pressure state and supplied in a high-pressure state unlike a conventional method, a buffer tank for storing the gas can be constructed using a low-pressure small-capacity equipment, thereby reducing and actual equipment construction and investment.

Therefore, since an operation of an excess gas recovery equipment can simply and easily controlled and driven due to the simple equipment, the ironmaking process can easily controlled.

In addition, a pressure control of a melter-gasifier, which is an important function of the excess gas, can easily implemented.

### Brief Description of Drawings

FIG. 1 is a view illustrating an excess gas system of an ironmaking process using non-coking coals and fine iron ores.

FIG. 2 is a view illustrating a conventional excess gas recovery system of an ironmaking process using non-coking coals and fine iron ores.

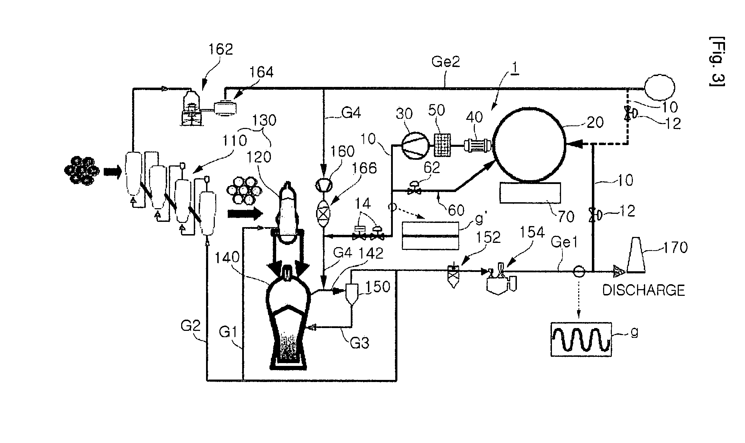

FIG. 3 is a view illustrating an excess gas recovery system of an ironmaking process using non-coking coals and fine iron ores according to the present invention.

### Mode for the Invention

Reference will now be made in detail to the embodiments of the present disclosure, examples of which are illustrated in the accompanying drawings.

FIG. 3 is a view of an ironmaking process using non-coking coals and fine iron ores and including an excess gas recovery apparatus 1 according to the present invention. Hereinafter, the same reference numeral will be used for the same or similar parts or components in the conventional ironmaking process, and the detailed description will be omitted.

For example, reference numerals of components with respect to an excess gas recovery apparatus according to the present invention are illustrated in the 10 series, and reference numerals of components with respect to an ironmaking process are illustrated in the 100 series. First characters of gas circulation lines and excess gas lines that are main lines in a gas circulation system are illustrated with a character "G" and numerals are used for their distinction.

Referring to FIG. 3, in an ironmaking process according to the present invention, an excess gas recovery apparatus 1 of the ironmaking process using non-coking coals and fine iron ores includes an excess gas recovery line 10, a gas storage unit 20, and a compressor 30. The excess gas recovery line 10 is associated with at least one of an excess gas line Ge1 and an excess gas line Ge2, and circulates and supplies an excess gas into a gas discharge line 142 of a melter-gasifier 140. At least one or more gas storage unit 20 is disposed in the excess gas recovery line 10 to store the excess gas. The compressor 30 is disposed in the excess gas recovery line 10 of a downstream side of the gas storage unit 20 and converts a low-pressure gas of the gas storage unit 20 into a high-pressure gas.

In the excess gas recovery apparatus 1 of the ironmaking process, the excess gas recovery line 10 is connected to at least one of the excess gas line Ge1 and the excess gas line Ge2, for example, the excess gas line Ge1.

In this case, the important thing is that the excess gas recovered through the excess gas recovery line 10 flows and is stored into the gas storage unit 20 in a state that the excess gas is not compressed unlike a conventional method as illustrated in FIG. 2. The gas storage unit may be a buffer tank.

The excess gas recovered through the conventional excess gas recovery line G5 is compressed while the excess gas passes through the compressor 180 and is stored in the buffer tank 190 at a high pressure. However, in the excess gas recovery apparatus 1 according to the present invention, the excess gas is stored in the buffer tank that is the gas storage unit 20 in a state that the excess gas is discharged from the melter-gasifier as it is, i.e., in a state of a low pressure gas.

Since the low-pressure excess gas is stored in the buffer tank that is the gas storage unit 20 in the excess gas recovery apparatus 1 according to the present invention, the low-pressure small-capacity buffer tank may be used unlike a conventional buffer tank.

For example, in the conventional method, since the high pressure excess gas passing through the compressor 180 is stored in the buffer tank 190 as described in FIG. 2, the large capacity buffer tank 190 having 5 bars or more and 8,000 Nm³/h was used.

However, although the low-pressure small-capacity gas storage unit 20 (e.g., buffer tank) having about 2 bars or less and about 2,000 Nm³/h according to the present invention is used, there shouldn't be any problem.

The excess gas recovery apparatus 1 of the ironmaking process according to the present invention is very simplified in volume of facility construction, and thus, it is possible to sharply reduce investment costs.

Since the excess gas flows and is stored as it is in the buffer tank that is the gas storage unit 20 without being compressed, the excess gas is easily recovered even if an amount of a gas flow in which the compressor must be driven in case of conventional method is not generated, and an actual recovery rate of the excess gas increases up to almost 100%.

The more the recovery rate of the excess gas increases in the ironmaking process, the more a discharge amount of the excess gas decreases. As a result, usage of recycled excess gas increases to improve productivity of the ironmaking process.

In the conventional method, it is difficult to control the circulation of the high-pressure excess gas circulating in the melter-gasifier, the fluidized bed furnaces, and the reduction furnace because the high-pressure excess gas is stored in the buffer tank (See reference numeral 190 of FIG. 2). In the present invention, since the low-pressure excess gas is first stored in the buffer tank that is the gas storage unit, the equipment is simplified and control operation is easy.

Although only schematically shown in FIG. 3, a seal pot 70 for removing moisture condensed water) contained in the excess gas is connected to a lower portion of the excess gas recovery line 20, i.e., the buffer tank, included in the excess gas recovery line 10 of the excess gas recovery apparatus 1 according to the present invention.

For example, the seal pot 70 is previously known and used for removing the condensed water (moisture) condensed in a typical gas line. The seal pot 70 is connected to a main gas line, the condensed water is collected in a body of the seal pot 70, and a gas is circulated. The seal pot 70 includes a drain line to discharge the collected condensed water. Thus, the condensed water contained in the excess gas stored in the gas storage unit is treated in the seal pot 70.

Although only schematically shown in FIG. 3, a filter unit 50 (e.g., a screen mesh) and heater unit 40 (e.g., a steam heater) are further provided between the compressor 30 disposed in a downstream side of the gas storage unit 20 and the gas storage unit 20 in the excess gas recovery line 10.

The heater unit of the steam heater and the filter unit are previously known, and for example, the heater unit further removes a remaining moisture contained in the excess gas in which the condensed water is treated in the seal pot 70 disposed on a portion of the gas storage unit. The filter unit filters impurities or foreign substances such as tars included in the excess gas.

Thus, the excess gas passes through the seal pot 70, the heater unit 40, and the filter unit 50 to remove the moisture and filter the foreign substances such as the tars. As a result, clean excess gas is supplied to the compressor 30 to prevent equipment damage or an operation failure due to adhesion of the foreign substances such as the tars included in the excess gas to the compressor 30.

Referring to FIG. 3, in the excess gas recovery line 10 of the excess gas recovery apparatus 1 according to the present invention, a high-pressure gas reverse supply line 60 is disposed between a downstream side of the compressor 30 and the buffer tank that is the gas storage unit 20. The high-pressure gas reverse supply line 60 reversely supplies a high-pressure gas to the buffer tank such that the gas is smoothly discharged from the gas storage unit.

The high-pressure gas reverse supply line 60 minutely controls a flow amount of the high-pressure gas passing through the compressor 30. Since the compressor 30 disposed in the excess gas recovery line 10 of the present invention has a large capacity of 20,000 N m'/h or more, the compressor 30 does not control a small capacity of 500 Nm³/h or less.

Thus, the excess gas having a normal flow amount flows into the excess gas recovery line 10, and the high-pressure gas reverse supply line 60 uses a control valve 62 therein in order to minutely control the gas flow amount to be recovered.

Referring to FIG. 3, in the excess gas recovery line 10 according to the present invention, an excess gas inflow side is associated with at least one of the excess gas line Ge1 and the excess gas line Ge2, and excess gas outflow side is branched from the excess gas line Ge2 and connected to a gas circulation line G4 connected to a gas discharge line 142.

The high-pressure gas stored in the buffer tank that is the gas storage unit and compressed in the compressor is circulated and supplied into a reduction furnace 120, fluidized bed furnaces 110, and a melter-gasifier 140 through the gas circulation lines G1, G2, and G3, respectively, which are associated with the gas discharge line 142.

Therefore, the collapse of the fluidized beds within the fluidized bed furnaces 110 and the reduction furnace 120 can be prevented, and the pressure within the melter-gasifier 140 can be uniformly maintained controlled).

Referring to FIG. 3, at least one control valve 14 for controlling the circulation of the high-pressure gas is disposed in a downstream side of the excess gas recovery line 10.

Control valves 12 for controlling a gas flow of each of excess gas lines may disposed in an upstream side of the excess gas recovery line 10 connected to the excess gas line Ge1 and the excess gas line Ge2.

The excess gas recovery method using the excess gas recovery apparatus 1 of the prevent invention may be summarized as follows. In the ironmaking process for making the molten iron using the non-coking coals and the fine iron ores in the fluidized bed furnaces, the reduction furnace, and the melter-gasifier, the low-pressure excess gas discharged from the fluidized bed furnaces and/or the melter-gasifier is stored as it is in the buffer tank that is the gas storage unit 20.

The low-pressure excess gas stored in the buffer tank is converted into the high-pressure excess gas by passing through the compressor 30. The high-pressure excess is circulated and supplied into the gas discharge line 142 through the gas circulation line G4.

As illustrated in simplified graphs g and g' of FIG. 2, hunting phenomenon in which the pressure pick value of the excess gas according to the operation condition of the melter-gasifier is irregular may occur in the excess gas of the initial gas line Ge1. However, the pressure pick value of the excess gas according to the present invention is flat because the excess gas passes through the buffer tank that is the gas storage unit 20 of the excess recovery line 10 and the compressor 30. Therefore, the excess gas having a uniform pressure is circulated and supplied.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims.

### Industrial Applicability

According to the present invention, the collapse of the fluidized beds within the fluidized bed furnaces and the reduction furnace can be prevented, and the pressure within the melter-gasifier can be uniformly maintained to improve the operation of the ironmaking process.

## Claims

1. An apparatus for recovering an excess gas in an ironmaking process which makes a molten iron with a fluidized bed furnace (110), a reduction furnace (120), and a melter-gasifier (140), the apparatus comprising:
an excess gas recovery line associated with a melter-gasifier-side excess gas line (Ge1) and a fluidized bed furnace-side excess gas line (Ge2), the excess gas recovery line (10) recovering the excess gas from at at least one of the melter-gasifier (140) and the fluidized bed furnace (110);
one or more gas storage units (20) disposed in the excess gas recovery line (10), each of the gas storage units receiving and storing the excess gas; and
a compressor (30) disposed in the excess gas recovery line of a downstream side of the gas storage unit (20), the compressor (30) compressing the excess gas discharged from the gas storage unit (20),
wherein the excess gas recovery line (10) is branched from the fluidized bed furnace-side excess gas line (Ge2) and connected to a gas circulation line (G4) connected to a gas discharge line (142) of the melter-gasifier (140),
wherein the excess gas recovery line (10) circulates and supplies an excess gas into a gas discharge line (142) of the melter-gasifier (140) and is associated with each of fluidized bed furnace-side, reduction furnace-side, and melter-gasifier-side gas circulation lines (G1, G2, G3) to supply the recovered excess gas to each of furnaces, thereby preventing collapse of fluidized beds and pressure irregularity within each of the furnaces.

2. The apparatus of claim 1, further comprising at least one of a heater unit (40) and a filter unit (50) for removing moisture or foreign substances in the excess gas recovery line (10) of an upstream side of the compressor (30).

3. The apparatus of claim 1, further comprising a high-pressure gas reverse supply line (60) disposed between a downstream side of the compressor (30) of the excess gas recovery line (10) and the gas storage unit (20).

4. The apparatus of claim 1, wherein the gas storage unit (20) comprising a buffer tank, and a seal pot (70) for treating condensed water contained in the gas is connected to a lower portion of the buffer tank.

5. A method for recovering an excess gas in an ironmaking process which makes a molten iron with a fluidized bed furnace (110), a reduction furnace (120), and a melter-gasifier (140), the method comprising:
storing a recovered excess gas discharged from the fluidized bed furnace (110) and the melter-gasifier (140) in a storage unit (20), specifically in a buffer tank as it is; and
converting the excess gas discharged from the storage unit (20), specifically the buffer tank into a high-pressure gas to circulate and supply the high-pressure gas into at least one of the melter-gasifier (140), the fluidized bed furnace (110), and the reduction furnace (120);
wherein the excess gas recovery line (10) is branched from the fluidized bed furnace-side excess gas line (Ge2) and connected to a gas circulation line (G4) connected to a gas discharge line (142) of the melter-gasifier (140); and
wherein the excess gas recovery line (10) circulates and supplies the excess gas into the gas discharge line (142) of the melter-gasifier (140) and is associated with each of fluidized bed furnace-side, reduction furnace-side, and melter-gasifier-side gas circulates lines (G1, G2, G3) to supply the recovered excess gas to each of furnaces, thereby preventing collapse of fluidized beds and pressure irregularity within each of the furnaces.

6. The method of claim 5, wherein the excess gas discharged from the storage unit (20), specifically the buffer tank passes through a compressor (30) to convert the excess gas into the high-pressure gas.

7. The method of claim 6, wherein the excess gas discharged from the storage unit (20), specifically the buffer tank is supplied to the compressor (30) after removing moisture or foreign substances contained in the excess gas.

## Patentansprüche

1. Vorrichtung zum Rückgewinnen eines überschüssigen Gases in einem Eisenherstellungsprozess, bei dem ein Schmelzeisen mit einem Wirbelschichtofen (110), einem Reduktionsofen (120) und einem Einschmelzvergaser (140) hergestellt wird, wobei die Vorrichtung umfasst:
eine Überschussgasrückgewinnungsleitung, die mit einer einschmelzvergaserseitigen Überschussgasleitung (Ge1) und einer wirbelschichtofenseitigen Überschussgasleitung (Ge2) verbunden ist, wobei die Überschussgasrückgewinnungsleitung (10) das überschüssige Gas aus dem Einschmelzvergaser (140) und/oder dem Wirbelschichtofen (110) rückgewinnt;
eine oder mehrere Gasspeichereinheit/en (20), die in der Überschussgasrückgewinnungsleitung (10) angeordnet sind, wobei jede der Gasspeichereinheiten das überschüssige Gas aufnimmt und speichert; und
einen Kompressor (30), der in der Überschussgasrückgewinnungsleitung auf einer Abstromseite der Gasspeichereinheit (20) angeordnet ist, wobei der Kompressor (30) das aus der Gasspeichereinheit (20) ausgeleitete überschüssige Gas komprimiert,
wobei die Überschussgasrückgewinnungsleitung (10) von der wirbelschichtofenseitigen Überschussgasleitung (Ge2) abgezweigt und an eine Gaszirkulationsleitung (G4) angeschlossen ist, die an eine Gasaustragsleitung (142) des Einschmelzvergasers (140) angeschlossen list,
wobei die Überschussgasrückgewinnungsleitung (10) ein überschüssiges Gas umwälzt und in die Gasaustragsleitung (142) des Einschmelzvergasers (140) zuführt und mit jeweils einer wirbelschichtofenseitigen, reduktionsofenseitigen und einschmelzvergaserseitigen Gaszirkulationsleitung (G1, G2, G3) verbunden ist, um jedem der Öfen das rückgewonnene überschüssige Gas zuzuführen,
wodurch ein Zusammenbruch der Wirbelschichten und Druckunregelmäßigkeiten in jedem der Öfen verhindert werden.

2. Vorrichtung nach Anspruch 1, darüber hinaus eine Heizvorrichtungseinheit (40) und/oder eine Filtereinheit (50) umfassend, um in der Überschussgasrückgewinnungsleitung (10) vorhandene Feuchtigkeit oder Fremdstoffe auf einer Zustromseite des Kompressors (30) zu entfernen.

3. Vorrichtung nach Anspruch 1, darüber hinaus eine Hochdruckgasrückzufuhrleitung (60) umfassend, die zwischen einer Abstromseite des Kompressors (30) der Überschussgasrückgewinnungsleitung (10) und der Gasspeichereinheit (20) angeordnet ist.

4. Vorrichtung nach Anspruch 1, wobei die Gasspeichereinheit (20) einen Puffertank umfasst, und ein Abdichttopf (70) zur Behandlung von im Gas enthaltenem Kondenswasser an einen unteren Abschnitt des Puffertanks angeschlossen ist.

5. Verfahren zum Rückgewinnen eines überschüssigen Gases in einem Eisenherstellungsprozess, bei dem ein Schmelzeisen mit einem Wirbelschichtofen (110), einem Reduktionsofen (120) und einem Einschmelzvergaser (140) hergestellt wird, wobei das Verfahren umfasst:
Speichern eines rückgewonnenen überschüssigen Gases, das aus dem Wirbelschichtofen (110) und dem Einschmelzvergaser (140) ausgeleitet wurde, in unveränderter Form in einer Speichereinheit (20), insbesondere in einem Puffertank; und
Umwandeln des überschüssigen Gases, das aus der Speichereinheit (20), insbesondere dem Puffertank ausgeleitet wurde, in ein Hochdruckgas, um das Hochdruckgas umzuwälzen und dem Einschmelzvergaser (140) und/oder Wirbelschichtofen (110) und/oder Reduktionsofen (120) zuzuführen;
wobei die Überschussgasrückgewinnungsleitung (10) von der wirbelschichtofenseitigen Überschussgasleitung (Ge2) abgezweigt und an eine Gaszirkulationsleitung (G4) angeschlossen ist, die an eine Gasaustragsleitung (142) des Einschmelzvergasers (140) angeschlossen ist; und
wobei die Überschussgasrückgewinnungsleitung (10) das überschüssige Gas umwälzt und in die Gasaustragsleitung (142) des Einschmelzvergasers (140) zuführt und mit jeweils einer wirbelschichtofenseitigen, reduktionsofenseitigen und einschmelzvergaserseitigen Gaszirkulationsleitung (G1, G2, G3) verbunden ist, um jedem der Öfen das rückgewonnene überschüssige Gas zuzuführen, wodurch ein Zusammenbruch der Wirbelschichten und Druckunregelmäßigkeiten in jedem der Öfen verhindert werden.

6. Verfahren nach Anspruch 5, wobei das überschüssige Gas, das aus der Speichereinheit (20), insbesondere dem Puffertank ausgeleitet wurde, durch einen Kompressor (30) strömt, um das überschüssige Gas in das Hochdruckgas umzuwandeln.

7. Verfahren nach Anspruch 6, wobei das überschüssige Gas, das aus der Speichereinheit (20), insbesondere dem Puffertank ausgeleitet wurde, dem Kompressor (30) zugeführt wird, nachdem im überschüssigen Gas enthaltene Feuchtigkeit oder Fremdstoffe entfernt wurden.

## Revendications

1. Appareil de récupération d'un gaz excédentaire dans un processus de fabrication de fonte qui fabrique une fonte liquide avec un four à lit fluidisé (110), un four de réduction (120), et un fondeur-gazéifieur (140), l'appareil comprenant :
une conduite de récupération de gaz excédentaire associée à une conduite de gaz excédentaire côté fondeur-gazéifieur (Ge1) et une conduite de gaz excédentaire côté four à lit fluidisé (Ge2), la conduite de récupération de gaz excédentaire (10) récupérant le gaz excédentaire depuis au moins l'un du fondeur-gazéifieur (140) et du four à lit fluidisé (110) ;
une ou plusieurs unités de stockage de gaz (20) disposée dans la conduite de récupération de gaz excédentaire (10), chacune des unités de stockage de gaz recevant et stockant le gaz excédentaire ; et
un compresseur (30) disposé dans la conduite de récupération de gaz excédentaire d'un côté aval de l'unité de stockage de gaz (20), le compresseur (30) comprimant le gaz excédentaire évacué depuis l'unité de stockage de gaz (20),
où la conduite de récupération de gaz excédentaire (10) est dérivée de la conduite de gaz excédentaire côté four à lit fluidisé (Ge2) et connectée à une conduite de circulation de gaz (G4) connectée à une conduite d'évacuation de gaz (142) du fondeur-gazéifieur (140),
où la conduite de récupération de gaz excédentaire (10) fait circuler et fournit un gaz excédentaire dans la conduite d'évacuation de gaz (142) du fondeur-gazéifieur (140) et est associée à chacune des conduites de circulation de gaz côté four à lit fluidisé, côté four de réduction, et côté fondeur-gazéifieur (G1, G2, G3) pour fournir le gaz excédentaire récupéré à chacun des fours, empêchant ainsi un effondrement de lits fluidisés et une irrégularité de pression dans chacun des fours.

2. L'appareil de la revendication 1, comprenant en outre au moins l'une d'une unité de chauffage (40) et d'une unité de filtre (50) pour enlever de l'humidité ou des substances étrangères dans la conduite de récupération de gaz excédentaire (10) d'un côté amont du compresseur (30).

3. L'appareil de la revendication 1, comprenant en outre une conduite de fourniture inverse de gaz haute pression (60) disposée entre un côté aval du compresseur (30) de la conduite de récupération de gaz excédentaire (10) et l'unité de stockage de gaz (20).

4. L'appareil de la revendication 1, où l'unité de stockage de gaz (20) comprend un réservoir tampon, et un pot tampon (70) pour traiter de l'eau condensée contenue dans le gaz est connecté à une partie inférieure du réservoir tampon.

5. Procédé de récupération d'un gaz excédentaire dans un processus de fabrication de fonte qui fabrique une fonte liquide avec un four à lit fluidisé (110), un four de réduction (120), et un fondeur-gazéifieur (140), le procédé comprenant :
le stockage d'un gaz excédentaire récupéré évacué depuis le four à lit fluidisé (110) et le fondeur-gazéifieur (140) dans une unité de stockage (20), spécifiquement dans un réservoir tampon en l'état ; et
la conversion du gaz excédentaire évacué depuis l'unité de stockage (20), spécifiquement le réservoir tampon, en un gaz haute pression pour faire circuler et fournir le gaz haute pression dans au moins l'un du fondeur-gazéifieur (140), du four à lit fluidisé (110), et du four de réduction (120) ;
où la conduite de récupération de gaz excédentaire (10) est dérivée de la conduite de gaz excédentaire côté four à lit fluidisé (Ge2) et connectée à une conduite de circulation de gaz (G4) connectée à une conduite d'évacuation de gaz (142) du fondeur-gazéifieur (140) ; et
où la conduite de récupération de gaz excédentaire (10) fait circuler et fournit le gaz excédentaire dans la conduite d'évacuation de gaz (142) du fondeur-gazéifieur (140) et est associée à chacune des conduites de circulation de gaz côté four à lit fluidisé, côté four de réduction, et côté fondeur-gazéifieur (G1, G2, G3) pour fournir le gaz excédentaire récupéré à chacun des fours, empêchant ainsi un effondrement de lits fluidisés et une irrégularité de pression dans chacun des fours.

6. Le procédé de la revendication 5, où le gaz excédentaire évacué depuis l'unité de stockage (20), spécifiquement le réservoir tampon, traverse un compresseur (30) pour convertir le gaz excédentaire en le gaz haute pression.

7. Le procédé de la revendication 6, où le gaz excédentaire évacué depuis l'unité de stockage (20), spécifiquement le réservoir tampon, est fourni au compresseur (30) après enlèvement d'humidité ou de substances étrangères contenues dans le gaz excédentaire.
